# EUROPÄISCHE PATENTSCHRIFT

(11) **EP 1 516 720 B1**
(45) Veröffentlichungstag und Bekanntmachung des Hinweises auf die Patenterteilung: **09.08.2006**
(21) Anmeldenummer: 04018805.4
(22) Anmeldetag: 07.08.2004
(51) Int. Cl.: B32B 5/18, B32B 27/40

(54) **Verbundelement, enthaltend einen Polyurethanhaftvermittler**
Composite element comprising a polyurethane adhesion promoter
Elément composite contenant de polyuréthane comme promoteur d'adhésion

(30) Priorität: 19.09.2003 DE 10343902
(43) Veröffentlichungstag der Anmeldung: 23.03.2005
(73) Patentinhaber: BASF Aktiengesellschaft, 67056 Ludwigshafen (DE)
(72) Erfinder: Calgua, Erwin, 67480 Edenkoben (DE)

(56) Entgegenhaltungen:
- EP-A- 0 304 187
- EP-A- 0 835 750
- WO-A-99/00559
- WO-A-99/67086
- WO-A-03/022566
- US-A- 4 122 203
- US-A1- 2002 136 888

## Beschreibung

Die Erfindung betrifft die Verwendung eines Polyurethan-Haftvermittlers zur Verbesserung der Haftung zwischen den Schichten eines Verbundelements, enthaltend einen Polyisocyanuratschaumstoff und Deckschichten, sowie die Verbundelemente als solches und ein Verfahren zur Herstellung der Verbundelemente.

Durch das Verbot von Fluorchlorkohlenwasserstoffe als Treibmittel in Polyurethan-Systemen werden für die Herstellung Verbundelementen zur Wärmedämmung zur Zeit brennbare Treibmittel, wie z. B. Pentane, verwendet. Unter diesen Voraussetzungen, ist die Erfüllung von Brandschutzanforderungen mit Polyurethan-Systemen, die einen hohen Anteil an Flammschutzmittel enthalten, nur bedingt möglich.

Oft ist technisch bedingt ein geringerer Flammschutzgehalt wünschenswert. Daher werden für Dämmelement auch Polyisocyanuratschaumstoffe (PIR-Schaumstoffe) verwendet, da diese auch mit reduziertem Flammschutzmittelgehalt gute Flammschutzeigenschaften besitzen. PIR-Systeme haben jedoch eine im Vergleich zu PUR-Systemen geringere Haftung zu den meisten bekannten Oberflächen.

In der Bauindustrie z. B. werden Polyurethan-Verbundelemente hergestellt, die konstruktive Aufgaben erfüllen müssen, z.B. Wand- und Dachelemente. Bei diesen Konstruktionselementen spielt die Haftung eine wichtige Rolle. Konstruktionselemente mit metallischen Deckschichten müssen mindestens einen Haftungswert von≥ 0,08 N/mm² besitzen damit sie für die Bauindustrie zugelassen werden. PUR-Systeme haben auf metallischen Deckschichten Haftungswerte von 0,12 - 0,17 N/mm². Die Haftungswerte von PIR-Systemen sind im Durchschnitt kleiner als 0,1 N/mm². Dokument WO 99/00559 A offanbart Metallsamdwich panele mit einem Kern aus harfern Polyisocyanuratschaumstoff und einer Metallhaut wobei ein Haftvermittler verwendet wird, um die Haftung der Metallhaut auf dem Isocyanurayatkern zur verbessem. Der Haftvermittler wird kun vor dem Aufbringen der Polyisocyanuratschaummischung ausgehärtet.

Aufgabe der Erfindung war es daher, ein Verbundelement, insbesondere zur Wärmedämmung, bereit zu stellen, welches im wesentlichen mit reduziertem Flammschutzmittelgehalt sowohl den Anforderungen an die Haftung als auch an den Flammschutz genügt.

Die Aufgabe konnte durch den Einsatz eines Haftvermittlers auf Polyurethanbasis gelöst werden.

Gegenstand der Erfindung ist daher ein Verbundelement, insbesondere ein Wärmedämmelement, aufgebaut aus
i) einer ersten Deckschicht,
ii) einer Haftvermittlerschicht, enthaltend Polyurethan mit einer Dichte von 400 bis 1200 g/l,
iii) einer Schaumstoffschicht, enthaltend Polyisocyanurat mit einer Dichte von 30 bis 100 g/l,
iv) gegebenenfalls einer zweiten Haftvermittlerschicht, enthaltend Polyurethan mit einer Dichte von 400 bis 1200 g/l, und
v) einer zweiten Deckschicht.

In einer bevorzugten Ausführungsform weisen die Schichten des erfindungsgemäßen Verbundelements folgende Dicken auf:
- Schicht (i) und (v): eine Dicke von 200 µm bis 5 mm, bevorzugt 300 µm bis 2 mm, besonders bevorzugt 400 µm bis 1 mm,
- Schicht (ii): und gegebenenfalls Schicht (iv) eine Dicke von 10 µm bis 500 µm, bevorzugt 80 µm bis 400 µm, besonders bevorzugt 120 bis 300 µm, und
- Schicht (iii): eine Dicke von 2 cm bis 25 cm, bevorzugt von 2,5 cm bis 18 cm, besonders bevorzugt von 3 cm bis 15 cm.

Das erfindungsgemäße Verbundelement wird bevorzugt Wärmedämmelement, d.h. als Verbundelement zur Wärmedämmung verwendet. In einer bevorzugten Ausführungsform weist das erfindungsgemäße Wärmedämmelement eine Wärmeleitfähigkeit von weniger als 35 mW/mK, besonders bevorzugt von weniger als 25 mW/mK, gemessen nach DIN 52612 Teil 1, auf.

Bei den Deckschichten (i) und (v) sind grundsätzlich alle üblicherweise verwendeten, flexiblen und starren Deckschichten, wie beispielsweise Aluminium, Stahl, Bitumen, Papier, Mineral-Vliesstoffe, Vliesstoffe enthaltend organischer Fasern, Kunststoffplatten (z.B. Polystyrol), Kunststoff-Folien (z.B. PE-Folie), Holzplatten oder Gemische oder Laminate davon einsetzbar. Bevorzugt werde metallische Deckschichten, insbesondere Aluminium- und Stahl-Deckschichten, verwendet.

Bei dem in Schicht ii) und gegebenenfalls Schicht (iv) verwendeten Haftvermittler handelt es sich um einen aus dem Stand der Technik bekannten Haftvermittler auf Polyurethanbasis. Dieser Haftvermittler ist im allgemeinen erhältlich durch Umsetzung von
a) Polyisocyanaten mit
b) Verbindungen mit zwei gegenüber Isocyanaten reaktiven Wasserstoffatomen,
wobei das Umsetzungsverhältnis so gewählt wird, dass im Reaktionsgemisch das Verhältnis von Anzahl an Isocyanatgruppen zu Anzahl an gegenüber Isocyanaten reaktiven Gruppen 0,8 bis 1,8 : 1, bevorzugt 1 bis 1,6 : 1 beträgt.

Als Polyisocyanate (a) kommen die üblichen aliphatischen, cycloaliphatischen und insbesondere aromatischen Di- und/oder Polyisocyanate zum Einsatz. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI).

Als Verbindungen mit mindestens zwei gegenüber Isocyanat reaktiven Wasserstoffatomen (b) kommen im allgemeinen solche in Frage, die zwei oder mehrere reaktive Gruppen, ausgewählt aus OH-Gruppen, SH-Gruppen, NH-Gruppen, NH₂-Gruppen und CH-aciden Gruppen, wie z.B. β-Diketo-Gruppen, in Molekül tragen.

Vorzugsweise eingesetzt werden Polyetherole und/oder Polyesterole, besonders bevorzugt Polyetherpolyole. Die Hydroxylzahl der verwendeten Polyetherole und/oder Polyesterole beträgt vorzugsweise 25 bis 800 mg KOH/g, die Molekulargewichte sind im allgemeinen größer als 400. Die Polyurethane können ohne oder mit Kettenverlängerungs- und/oder Vernetzungsmitteln hergestellt werden. Als Kettenverlängerungs- und/oder Vernetzungsmittel kommen insbesondere zwei- oder dreifunktionelle Amine und Alkohole, insbesondere Diole und/oder Triole mit Molekulargewichten kleiner als 400, vorzugsweise von 60 bis 300, zum Einsatz.

Im Haftvermittler können gegebenenfalls additive oder reaktive Flammschutzmittel enthalten sein. Derartige Flammschutzmittel werden im allgemeinen in einer Menge von 0,1 bis 30 Gew.-%, bezogen auf das Gesamtgewicht der Polyolkomponente, eingesetzt.

Der Umsetzung von Polyisocyanaten a) mit Polyolen b) werden bevorzugt keine Treibmittel zugegeben. Die verwendeten Polyole können jedoch noch Restwasser enthalten, welches als Treibmittel wirkt. Die resultierenden Polyurethanhaftvermittler weisen eine Dichte von 400 bis 1200 g/l, bevorzugt von 500 bis 1000 g/l, besonders bevorzugt von 700 bis 900 g/l auf.

Bei der im erfindungsgemäßen Verbundbauteil enthaltenen Schicht iii) handelt es sich um einen allgemein bekannten Polyisocyanuratschaumstoff, der bevorzugt als wärmedämmende Schicht im Verbundelement dient.
Der die Schicht iii) bildende Polyisocyanuratschaumstoff ist erhältlich durch Umsetzung von
a) Polyisocyanaten mit
b) gegenüber Isocyanaten reaktiven Verbindungen, in Gegenwart von
c) Isocyanuratkatalysatoren,
wobei das Umsetzungsverhältnis so gewählt wird, dass im Reaktionsgemisch das Verhältnis von Anzahl an Isocyanatgruppen zu Anzahl an gegenüber Isocyanaten reaktiven Gruppen 1,8 bis 8 : 1, bevorzugt 1,9 bis 4 : 1 beträgt.

Die Komponenten a) und b) werden wie vorstehend beschrieben eingesetzt. Als Isocynanuratkatalysator c) werden im allgemeinen die aus dem Stand der Technik bekannten Isocyanuratgruppen bildende Katalysatoren, bevorzugt Alkalimetallsalze, wie Kaliumoctoat und/oder Kaliumacetat alleine oder in Kombination mit tertiären Aminen, eingesetzt. Die Isocyanuratbildung erfolgt bevorzugt bei Temperaturen über 60°C.

Der Umsetzung von Polyisocyanaten a) mit Polyolen b) werden bevorzugt Treibmittel (d) zugegeben. Als Treibmittel (d) werden im allgemeinen sogenannte physikalische Treibmittel und gegebenenfalls Wasser eingesetzt. Unter physikalische Treibmittel versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, sowie Ether, Ester, Ketone und/oder Acetale. Daneben ist es möglich, inerte Gase, wie Stickstoff, Kohlendioxid oder Edelgase unter Druck in den Polyurethan-Aufbaukomponenten zu lösen.

Das Treibmittel (d) wird im allgemeinen in einer Menge eingesetzt, so dass die resultierenden Polyisocyanuratschaumstoffe eine Dichte von 20 bis 300 g/l, bevorzugt von 30 bis 100 g/l, besonders bevorzugt von 35 bis 80 g/l aufweisen.

In einer bevorzugten Ausführungsform handelt es sich bei dem PIR-Schaumstoff der Schicht iii) um einen Hartschaumstoff, d.h. der Schaumstoff weist eine Druckspannung bei 10 % Stauchung bzw. Druckfestigkeit nach DIN 53 421 / DIN EN ISO 604 von größer gleich 100 kPa auf. Weiterhin verfügt der Hartschaumstoff im allgemeinen nach DIN ISO 4590 über eine Geschlossenzelligkeit von größer 85%, bevorzugt größer 90 %. Des weiteren weist der PIR-Schaumstoff bevorzugt einen mittleren Zelldurchmesser von 10 bis 600 µm, bevorzugt von 50 bis 400 µm, gemessen nach ASTM 3576-77, auf.

Gegenstand der Erfindung ist weiterhin ein Verfahren zur Herstellung eines erfindungsgemäßen Verbundelements aufgebaut aus den Schichten
i) einer ersten Deckschicht,
ii) einer Haftvermittlerschicht, enthaltend Polyurethan mit einer Dichte von 400 bis 1200 g/l,
iii) einer Schaumstoffschicht, enthalten Polyisocyanurat mit einer Dichte von 20 bis 300 g/Im,
iv) gegebenenfalls einer zweiten Haftvermittlerschicht, enthaltend Polyurethan mit einer Dichte von 400 bis 1200 g/l, und
v) einer zweiten Deckschicht.
umfassend die Schritte:
A) Bereitstellen einer ersten Deckschicht,
B) Aufbringen von reaktivem Polyurethanhaftvermittler, als flüssige Reaktionsmischung, auf die erste Deckschicht,
C) Aufbringen von Polyisocyanurat- Rektionsmischung auf die Haftvermittlerschicht und Aufschäumen lassen der Polyisocyanurat-Reaktionsmischung,
D) gegebenenfalls Aufbringen einer zweiten Haftvermittlerschicht auf die zweite Deckschicht und
E) Aufbringen der zweiten mit ausreagierendem Polyurethanhaftvermittler versehenen Deckschicht auf die Polyisocyanuratschicht.

In einer besonders bevorzugten Ausführungsform wird die Reaktivität des Haftvermittlers so eingestellt, dass die Haftvermittlerschicht noch mit der PIR-Reaktionsmischung reagiert. Dies wird gewährleistet, wenn die Polyisocyanurat-Reaktionsmischung zu einem Zeitpunkt aufgebracht wird, in dem die Haftvermittlerschicht noch nicht vollständig ausgehärtet ist, d.h. die Polyurethanreaktion zwischen Isocyanat- und Polyolkomponenten hat schon eingesetzt, ist aber noch nicht abgeschlossen.

Die einzelnen Schichten des mit dem erfindungsgemäßen Verfahren hergestellten Verbundelements weisen bevorzugt die vorstehend beschriebenen Dicken auf.

In einer bevorzugten Ausführungsform wird das erfindungsgemäße Verfahren mittels einer, aus dem Stand der Technik bekannten, Doppelbandanlage durchgeführt.

In einer weiteren bevorzugten Ausführungsform erfolgt vor oder nach dem Auftragen der Haftvermittlerschicht, insbesondere mittels eines Vorwärmofens, eine Erwärmung auf 30 bis 60°C.

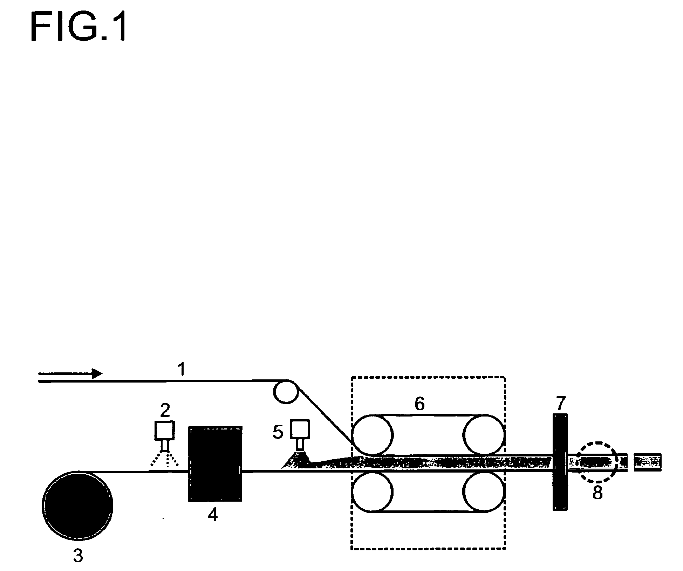

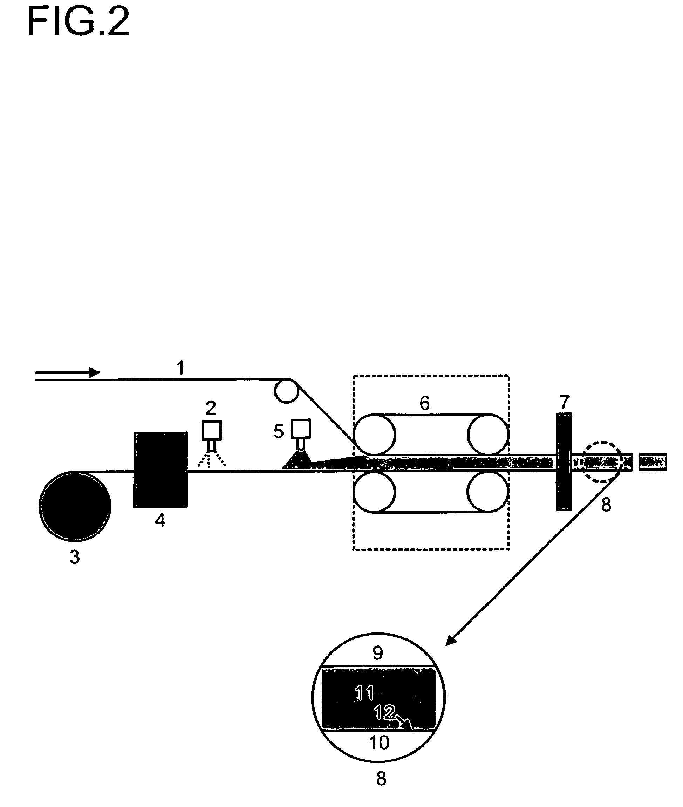

Die Figuren 1 und 2 veranschaulichen das erfindungsgemäße Verfahren mittels Doppelbandanlage. In den Figuren bedeutet
- 1: Obere Deckschicht
- 2: Auftragsvorrichtung für Haftvermittlerschicht
- 3: Untere Deckschicht aus Coil-Coating-Rolle
- 4: Vorwärmofen
- 5: Auftragsvorrichtung für PIR-Schaumstoffsystem (Hochdruck- bzw. Niederdruckmischkopf)
- 6: Doppelband
- 7: Säge
- 8: Detailansicht
- 9: Obere Deckschicht (v)
- 10: Untere Deckschicht (i)
- 11: PIR-Schaumstoffschicht (iii)
- 12: Haftvermittlerschicht (ii)

Der Polyurethanhaftvermittler wird flüssig, als Reaktionsmischung, auf die untere Deckschicht aufgetragen. Der Auftrag kann vor oder nach dem bevorzugt vorhandenen Vorwärmofen erfolgen. Die Reaktivität des Polyurethanhaftvermittlers wird auf das zu verarbeitende PIR-Schaumsystem durch geeignete Wahl der Komponenten (a) und (b) angepasst, damit die Haftvermittlerschicht noch mit der PIR-Reaktionsmischung reagiert. Die aufzutragende Haftvermittlermenge richtet sich nach der gewünschten Dicke der Haftvermittlerschicht und liegt bevorzugt bei 100 - 150 g/m².
Schließlich ist Gegenstand der Erfindung die Verwendung eines Polyurethan-Haftvermittlers zur Verbesserung der Haftung zwischen den Schichten eines Verbundelements, enthaltend einen Polyisocyanuratschaumstoff und Deckschichten.

Bevorzugt ist Gegenstand der Erfindung die Verwendung eines reaktiven Polyurethan-Haftvermittlers, der beim Zusammenbringen von Schaumstoffschicht und Deckschicht noch reaktionsfähig ist, d.h. dass die Polyurethanreaktion des Haftvermittlers noch nicht abgeschlossen ist.

In einer bevorzugten Ausführungsform wird durch die erfindungsgemäße Verwendung des Polyurethanhaftvermittlers eine Haftung zwischen Deckschicht, insbesondere zwischen metallischer Deckschicht, und PIR-Schaumstoff von mehr als 0,12 N/mm². insbesondere zwischen 0,13 und 0,3 N/mm² (gemessen nach DIN 53292) erzielt.

Die Erfindung soll durch nachfolgendes Beispiel veranschaulicht werden.

### Beispiel

In einer Doppelbandanlage gemäß Figur 2 wurden Verbundelemente hergestellt, die aufgebaut sind aus den Schichten:
i) unteren Deckschicht,
ii) Haftvermittlerschicht,
iii) PIR-Schaumstoffschicht und
v) oberen Deckschicht.

Als Deckschichten (i) und (v) wurde ein Aluminium-Coil-Coating mit einer Dicke von 0,6 mm verwendet.

Als Haftvermittler wurde ein Polyurethansystem mit einem Index von 110 in einer Menge von 120 g/m² aufgetragen.

Als PIR-Schaumstoff wurde das kommerziell erhältliche System H 1132/22/0 verwendet. Der resultierende Schaumstoff wies eine Dicke von 8 cm und eine Dichte von 42,5 g/l auf.

Zum Vergleich wurden analog Verbundelemente ohne Auftrag des Haftvermittlers hergestellt.

Die Haftungswerte der erfindungsgemäßen Verbundelemente und der Vergleichsverbundelemente wurden gemessen und sind in Tabelle 1 wiedergegeben.

**Tabelle 1:**

| Ohne Haftvermittler | | Mit Haftvermittler | |
|---|---|---|---|
| Haftung (N/mm²) | Bruchstelle | Haftung (N/mm²) | Bruchstelle |
| 0,11 | Deckschicht | 0,17 | Schaum |

Bei den Probekörper mit 2-K Haftvermittler liegt der Haftungswert höher als gemessen, weil nicht die Deckschicht sich getrennt hat, sondern Schaumstoffbruch erfolgte.

## Patentansprüche

1. Verfahren zur Herstellung eines Verbundelements aufgebaut aus den Schichten
i) einer ersten Deckschicht,
ii) einer reaktiven Haftvermittlerschicht, enthaltend Polyurethan mit einer Dichte von 400 bis 1200 g/l,
iii) einer Schaumstoffschicht, enthaltend Polyisocyanurat mit einer Dichte von 30 bis 100 g/l,
iv) gegebenenfalls einer zweiten reaktiven Haftvermittlerschicht, enthaltend Polyurethan mit einer Dichte von 400 bis 1200 g/l, und
v) einer zweiten Deckschicht.
umfassend die Schritte:
A) Bereitstellen einer ersten Deckschicht,
B) Aufbringen von reaktiven Polyurethanhaftvermittler, als flüssige Reaktionsmischung, auf die erste Deckschicht,
C) Aufbringen von Polyisocyanurat- Rektionsmischung auf die noch reaktionfähige Haftvermittlerschicht und Aufschäumen lassen der Polyisocyanurat-Reaktionsmischung,
D) gegebenenfalls Aufbringen einer zweiten Haftvermittlerschicht auf die zweite Deckschicht und
E) Aufbringen der zweiten mit ausreagierendem Polyurethanhaftvermittler versehenen Deckschicht auf die Polyisocyanuratschicht.

2. Verfahren nach Anspruch 1, **dadurch gekennzeichnet, dass** es mittels einer Doppelbandanlage durchgeführt wird.

3. Verfahren nach Anspruch 1 oder 2, **dadurch gekennzeichnet, dass** vor oder nach dem Auftragen der Haftvermittlerschicht eine Erwärmung auf 30 bis 60°C stattfindet

4. Verbundelement erhältlich nach einem Verfahren nach einem der Ansprüche 1 bis 3.

5. Verbundelement nach Anspruch 4, **dadurch gekennzeichnet, dass**
Schicht (i) einer Dicke von 200 µm bis 5 mm,
Schicht (ii) eine Dicke von 50 µm bis 500 µm,
Schicht (iii) eine Dicke von 2 cm bis 25 cm und
Schicht (v) eine Dicke von 200 µm bis 5 mm aufweist.

6. Verbundelement nach Anspruch 4 oder 5, **dadurch gekennzeichnet, dass** die Haftung zwischen der Deckschicht (i) und der Schaumstoffschicht (iii) mindestens mehr als 0,12 N/mm², gemessen nach DIN 53292, beträgt.

7. Verbundelement nach einem der Ansprüche 4 bis 6, **dadurch gekennzeichnet, dass** Schicht iii) erhältlich ist durch Umsetzung von
a) Polyisocyanaten mit
b) Verbindungen mit zwei gegenüber Isocyanaten reaktiven Wasserstoffatomen, in Gegenwart von
c) Isocyanuratkatalysatoren,
wobei das Umsetzungsverhältnis so gewählt wird, dass im Reaktionsgemisch das Verhältnis von Anzahl der Isocyanatgruppen zu Anzahl der gegenüber Isocyanaten reaktiven Gruppen 1,8 bis 8 : 1, bevorzugt 1,9 bis 4 : 1 beträgt.

8. Verbundelement nach einem der Ansprüche 4 bis 7, **dadurch gekennzeichnet, dass** es sich bei den Deckschichten (i) und (v) um Metallschichten handelt.

9. Verwendung eines reaktiven Polyurettian-Haftvermittlers, der beim Aufbringen der Pvlyisocyanat-Reaktionsmischung auf die Haftvermittlerschicht noch reaktionsfähig ist, zur Verbesserung der Haftung zwischen den Schichten eines Verbundelements, enthaltend einen Polyisocyanuratschaumstoff und Deckschichten.

## Claims

1. A process for producing a composite element composed of the following layers:
i) a first overlayer,
ii) an adhesion promoter layer, comprising polyurethane with a density of from 400 to 1200 g/l,
iii) a foam layer, comprising polyisocyanurate with a density of from 30 to 100 g/l,
iv) if appropriate, a second adhesion promoter layer, comprising polyurethane with a density of from 400 to 1200 g/l, and
v) a second overlayer,
comprises the steps of:
A) providing a first overlayer,
B) applying the reactive polyurethane adhesion promoter in the form of liquid reaction mixture to the first overlayer,
C) applying polyisocyanurate reaction mixture to the still reactive adhesion promoter layer and foaming the polyisocyanurate reaction mixture,
D) where appropriate, applying a second adhesion promoter layer to the second overlayer, and
E) applying the second overlayer, on which fully reacted polyurethane adhesion promoter is present, to the polyisocyanurate layer.

2. The process according to claim 1, which is carried out by means of a twin-belt system.

3. The process according to claim 1 or 2, wherein, prior to or after the application of the adhesion promoter layer, heating takes place to 30-60°C.

4. A composite element obtainable by a process according to any of claims 1 to 3.

5. The composite element according to claim 4, wherein
layer (i) has a thickness of from 200 µm to 5 mm,
layer (ii) has a thickness of from 50 µm to 500 µm,
layer (iii) has a thickness of from 2 cm to 25 cm, and
layer (v) has a thickness of from 200 µm to 5 mm.

6. The composite element according to claim 4 or 5, wherein the adhesion between the overlayer (i) and the foam layer (iii) is at least above 0.12 N/mm², measured to DIN 53292.

7. The composite element according to any of claims 4 to 6, wherein layer iii) is obtainable by reacting
a) polyisocyanates with
b) compounds having two hydrogen atoms reactive toward isocyanates, in the presence of
c) isocyanurate catalysts,
the ratio in the reaction being selected in such a way that the ratio of the number of isocyanate groups to the number of groups reactive toward isocyanates in the reaction mixture is from 1.8 to 8:1, preferably from 1.9 to 4:1.

8. The composite element according to any of claims 4 to 7, wherein the overlayers (i) and (v) are metal layers.

9. The use of a reactive polyurethane adhesion promoter which is still reactive when the polyisocyanate reaction mixture is applied to the adhesion promoter layer for improving the adhesion between the layers of a composite element, comprising a polyisocyanurate foam and overlayers.

## Revendications

1. Procédé de préparation d'un élément composite constitué des couches :
i) une première couche de recouvrement,
ii) une couche d'agent adhérisant réactif, contenant du polyuréthanne présentant une masse volumique de 400 à 1200 g/l,
iii) une couche de mousse, contenant du polyisocyanurate présentant une masse volumique de 30 à 100 g/l,
iv) éventuellement une deuxième couche d'agent adhérisant réactif, contenant du polyuréthanne présentant une masse volumique de 400 à 1200 g/l, et
v) une deuxième couche de recouvrement,
comprenant les étapes :
A) mettre à disposition une première couche de recouvrement,
B) appliquer sur la première couche de recouvrement de l'agent adhérisant réactif à base de polyuréthanne, sous la forme d'un mélange réactionnel liquide,
C) appliquer sur la couche d'agent adhérisant encore capable de réagir un mélange réactionnel à base de polyisocyanurate et laisser mousser le mélange réactionnel à base de polyisocyanurate,
D) éventuellement appliquer sur la deuxième couche de recouvrement une deuxième couche d'agent adhérisant, et
E) appliquer sur la couche de polyisocyanurate la deuxième couche de recouvrement pourvue d'agent adhérisant à base de polyuréthanne ayant cessé de réagir.

2. Procédé suivant la revendication 1, **caractérisé en ce qu'**il est effectué au moyen d'une installation à double bande.

3. Procédé suivant la revendication 1 ou 2, **caractérisé en ce qu'**un chauffage à 30 jusqu'à 60°C a lieu avant ou après l'application de la couche d'agent adhérisant.

4. Elément composite que l'on peut obtenir suivant un procédé selon l'une des revendications 1 à 3.

5. Elément composite suivant la revendication 4, **caractérisé en ce qu'**il présente
une couche (i) d'une épaisseur de 200 µm à 5 mm,
une couche (ii) d'une épaisseur de 50 µm à 500 µm,
une couche (iii) d'une épaisseur de 2 cm à 25 cm, et
une couche (v) d'une épaisseur de 200 µm à 5 mm.

6. Elément composite suivant la revendication 4 ou 5, **caractérisé en ce que** l'adhésion entre la couche de recouvrement (i) et la couche de mousse (iii) est au moins supérieure à 0,12 N/mm², mesurée selon la norme DIN 53292.

7. Elément composite suivant l'une des revendications 4 à 6, **caractérisé en ce que** la couche iii) peut être obtenue par réaction
a) de polyisocyanates avec
b) des composés comportant deux atomes d'hydrogène réactifs vis-à-vis des isocyanates, en présence
c) de catalyseurs d'isocyanurate,
les proportions réactionnelles étant choisies de façon que, dans le mélange réactionnel, le rapport entre le nombre des groupes isocyanate et le nombre des groupes réactifs vis-à-vis des isocyanates soit de 1,8 à 8:1, de préférence de 1,9 à 4:1.

8. Elément composite suivant l'une des revendications 4 à 7, **caractérisé en ce que**, pour ce qui concerne les couches de recouvrement (i) et (v), il s'agit de couches métalliques.

9. Utilisation d'un agent adhérisant réactif à base de polyuréthanne, qui est encore capable de réagir lors de l'application du mélange réactionnel à base de polyisocyanate sur la couche d'agent adhérisant, pour l'amélioration de l'adhésion entre les couches d'un élément composite contenant une mousse de polyisocyanurate et des couches de recouvrement.
